# EUROPEAN PATENT APPLICATION

(11) **EP 4 020 737 A1**
(43) Date of publication of application: **29.06.2022**
(21) Application number: 21217253.0
(22) Date of filing: 23.12.2021
(51) Int. Cl.: H02J 3/12

(54) **ELECTRIC POWER SYSTEM AND SERVER**

(30) Priority: 23.12.2020 JP 2020213624
(71) Applicant: TOYOTA JIDOSHA KABUSHIKI KAISHA, Toyota-shi, Aichi-ken, 471-8571 (JP)
(72) Inventor: HAMADA, Shigetaka, TOYOTA-SHI, AICHI-KEN, 471-8571 (JP); HIROSE, Haruka, TOYOTA-SHI, AICHI-KEN, 471-8571 (JP); HORII, Yusuke, TOYOTA-SHI, AICHI-KEN, 471-8571 (JP); NAKAMURA, Toru, TOYOTA-SHI, AICHI-KEN, 471-8571 (JP); SANO, Takaaki, TOYOTA-SHI, AICHI-KEN, 471-8571 (JP)
(74) Representative: Cabinet Beau de Loménie

(57) **Abstract**

When electric power supply from a power grid to a microgrid is interrupted and the microgrid performs an isolated operation, a CEMS server reads various types of information (priority setting information, information on operating ratios of first power adjustment resources during a prescribed period, meteorological information, and resource information) from a storage (S11), and creates an operation plan during the prescribed period using such information (S13). The priority setting information includes a priority A being a priority that does not allow a stop of electric power supply. The CEMS server performs the isolated operation of the microgrid based on the operation plan (S15).

## Description

This nonprovisional application is based on Japanese Patent Application No. 2020-213624 filed on December 23, 2020 with the Japan Patent Office, the entire contents of which are hereby incorporated by reference and to which the person of the art can refer to when considering the present disclosure.

### BACKGROUND

### Field

The present disclosure relates to an electric power system and a server.

### Description of the Background Art

Japanese Patent Laying-Open No. 2018-148679 discloses an aggregation control system that adjusts electric power between a plurality of facilities via a mobile power storage battery apparatus (battery electric vehicle). In this aggregation control system, demand and response is performed for interconnection with an external power grid.

### SUMMARY

In the event of a disaster or the like, electric power supply from an external power grid (e.g., a commercial power grid) to a microgrid may be interrupted. In this case, a supply and demand balance in the microgrid is achieved by the isolated operation of the microgrid. For example, some power adjustment resources cannot allow a stop of electric power, such as hospitals, disaster countermeasures offices, and/or data centers. The isolated operation of the microgrid is requested to achieve a supply and demand balance in the microgrid so as not to stop electric power supply to the power adjustment resources as described above.

The present disclosure has been made to solve the above problem. An object of the present disclosure is to restrain a stop of electric power supply to a power adjustment resource that cannot allow a stop of electric power during an isolated operation of a microgrid.

(1) An electric power system according to an aspect of the present disclosure includes a plurality of power adjustment resources electrically connected to a microgrid, and a management apparatus that controls the plurality of power adjustment resources and manages electric power of the microgrid. The microgrid is configured to be connected to and disconnected from a commercial power grid. The plurality of power adjustment resources include a first power adjustment resource and a second power adjustment resource, the first power adjustment resources receiving electric power supply and the second power adjustment resource supplying electric power when the microgrid is disconnected from the commercial power grid and performs an isolated operation. In the isolated operation, the management apparatus creates an operation plan of the microgrid based on information about a priority of electric power supply to the first power adjustment resource, and controls the plurality of power adjustment resources in accordance with the operation plan. The information includes a first priority, the first priority being the priority that does not allow a stop of electric power supply in the isolated operation. The management apparatus creates the operation plan such that electric power supply from the second power adjustment resource to the first power adjustment resource to which the first priority is set is not stopped.

With the above configuration, when the microgrid performs the isolated operation, the operation plan based on the information about a priority of electric power supply to the first power adjustment resource is created. The information includes the first priority being a priority that does not allow a stop of electric power supply. For example, the first priority is set to power adjustment resources that do not allow a stop of electric power supply, such as hospitals, disaster countermeasures offices, and/or data centers. This restricts a stop of electric power supply to the power adjustment resources to which the first priority is set, when the microgrid performs the isolated operation.

(2) In one embodiment, the management apparatus creates the operation plan such that electric power supply to the first power adjustment resource to which the first priority is set is allowed continuously for a prescribed period.

For example, when the commercial power grid goes down due to the occurrence of a disaster or the like, it is desired to appropriately manage supply and demand of the microgrid such that electric power supply to the first power adjustment resource, to which the first priority is set, is not stopped until the commercial power grid is expected to be recovered. With the above configuration, electric power can be supplied to the first power adjustment resource, to which the first priority is set, continuously for the prescribed period.

(3) In one embodiment, the second power adjustment resource includes a variable renewable energy source. The management apparatus uses meteorological information during the prescribed period for creating the operation plan.

The variable renewable energy source varies in the amount of electric power generated during the prescribed period, depending on meteorological conditions. With the use of the meteorological information during the prescribed period for creating the operation plan, an amount of electric power generated by the variable renewable energy source during the prescribed period can be estimated accurately. Accordingly, a more suitable operation plan can be created.

(4) In one embodiment, the variable renewable energy source includes a photovoltaic power generation system.

An amount of electric power generated by the photovoltaic power generation system during the prescribed period is estimated using the meteorological information during the prescribed period, and accordingly, a more suitable operation plan can be created.

(5) In one embodiment, the second power adjustment resource includes a hydrogen power generation system having a hydrogen tank that stores hydrogen. The management apparatus uses a remaining amount in the hydrogen tank for creating the operation plan.

With the use of a remaining amount in the hydrogen tank for creating the operation plan, an amount of electric power generated by the hydrogen power generation system during the prescribed period can be estimated accurately. Accordingly, a more suitable operation plan can be created.

(6) In one embodiment, the information includes information on the second power adjustment resource assigned in correspondence with the priority. The second power adjustment resource assigned to the first priority is a stationary generator. The management apparatus supplies electric power generated by the stationary generator to the first power adjustment resource to which the first priority is set.

With the above configuration, electric power generated by the stationary generator is supplied to the first power adjustment resource to which the first priority is set. The stationary generator can start electric power supply more stably and more immediately than another second power adjustment resource (e.g., a variable renewable energy source, a battery electric vehicle). Even when the commercial power grid goes down due to the occurrence of a disaster or the like, electric power can be supplied stably and immediately to the first power adjustment resource to which the first priority is set.

(7) In one embodiment, the second power adjustment resource includes a charging facility and an electric-powered vehicle, the charging facility being electrically connected to the microgrid, the electric-powered vehicle being connectable to the charging facility. The information includes a second priority, the second priority being the priority that allows a stop of electric power supply in the isolated operation. The second power adjustment resource assigned to the second priority includes the electric-powered vehicle. The management apparatus supplies electric power of the electric-powered vehicle to the first power adjustment resource to which the second priority is set.

With the above configuration, electric power of the second power adjustment resource (including an electric-powered vehicle), which is assigned to the second priority, is supplied to the first power adjustment resource to which the second priority is set. For example, when the commercial power grid goes down due to the occurrence of a disaster or the like, the electric-powered vehicle may require some time before starting electric power supply, such as a time for moving to a place in which the charging facility is provided. Such an electric-powered vehicle is assigned to the second priority that allows a stop of electric power supply. This allows assignment of the second power adjustment resource suitable for the priority, achieving a supply and demand balance of electric power of the microgrid.

(8) A server according to another aspect of the present disclosure is a server that manages electric power of a microgrid electrically connected with a plurality of power adjustment resources. The microgrid is configured to be connected to and disconnected from a commercial power grid. The plurality of power adjustment resources include a first power adjustment resource and a second power adjustment resource, the first power adjustment resource receiving electric power supply and the second power adjustment resource supplying electric power when the microgrid is disconnected from the commercial power grid and performs an isolated operation of the microgrid. The server includes: a storage that stores information about a priority of electric power supply to the first power adjustment resource; and a controller that, in the isolated operation, creates an operation plan of the microgrid based on the information and controls the plurality of power adjustment resources in accordance with the operation plan. The information includes a first priority, the first priority being the priority that does not allow a stop of electric power supply in the isolated operation. The controller creates the operation plan such that electric power supply from the second power adjustment resource to the first power adjustment resource to which the first priority is set is not stopped.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows a schematic configuration of an electric power system according to an embodiment.
Fig. 2 is a diagram for illustrating example priority setting information (information about priorities of electric power supply).
Fig. 3 is a diagram for illustrating target operating ratios of first power adjustment resources in an operation plan.
Fig. 4 is a functional block diagram showing components of a CEMS server by function.
Fig. 5 is a flowchart showing a procedure of a process performed by the CEMS server during an interconnected operation of a microgrid.
Fig. 6 is a flowchart showing a procedure of a process performed by the CEMS server during an isolated operation of the microgrid.

### DESCRIPTION OF THE PREFERRED EMBODIMENTS

An embodiment of the present disclosure will be described below in detail with reference to the drawings. The same or corresponding elements in the drawings have the same reference characters allotted and description thereof will not be repeated.

### [Embodiment]

### <Overall Configuration of Electric Power System>

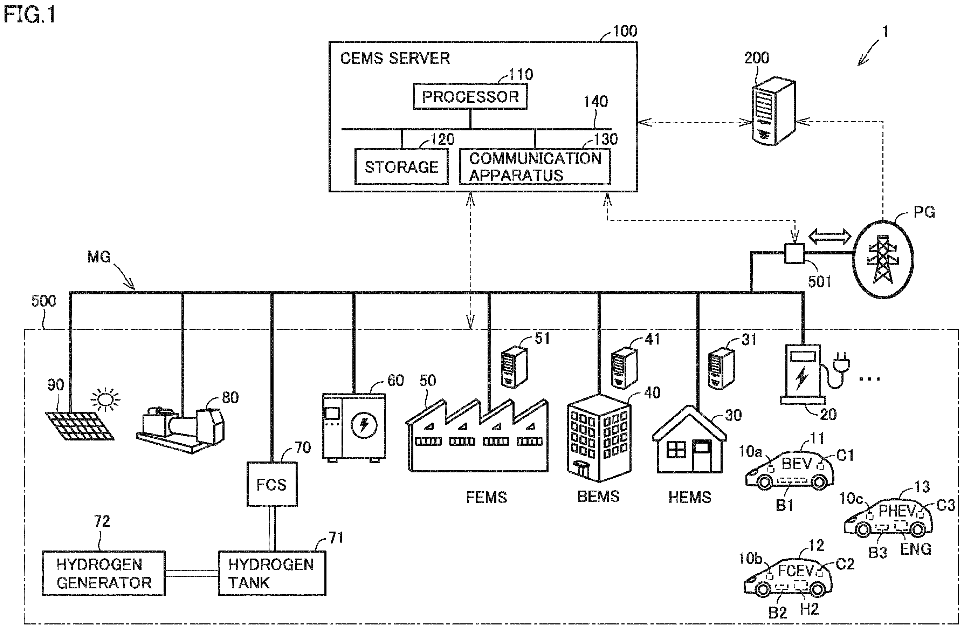

Fig. 1 shows a schematic configuration of an electric power system according to an embodiment. An electric power system 1 includes a power grid PG, a microgrid MG, a community energy management system (CEMS) server 100, a power transmission and distribution utility server 200, a power adjustment resource group 500, and a power reception and transformation facility 501.

Microgrid MG is a power network that supplies electric power to one city (e.g., a smart city) as a whole. Supply and demand of electric power in microgrid MG is managed by CEMS server 100. A power line for networking of a plurality of power adjustment resources in microgrid MG may be a private power line. Microgrid MG is configured to be connected to and disconnected from power grid PG.

Power transmission and distribution utility server 200 is a computer that manages supply and demand of power grid PG. Power grid PG is a power network constructed by a power plant (not shown) and a power transmission and distribution facility. In the present embodiment, a power company serves as a power generation utility and a power transmission and distribution utility. The power company corresponds to a general power transmission and distribution utility, and maintains and manages power grid PG (commercial power grid). The power company corresponds to a manager of power grid PG. Power transmission and distribution utility server 200 belongs to the power company.

Power reception and transformation facility 501 is provided at a point of interconnection (power reception point) of microgrid MG and is configured to switch between connection (parallel in) and disconnection (parallel off) between power grid PG and microgrid MG. Power reception and transformation facility 501 is located at a point of connection between microgrid MG and power grid PG.

When microgrid MG is performing an interconnected operation while being connected to power grid PG, power reception and transformation facility 501 receives alternating-current (AC) power from power grid PG, down-converts the received power, and supplies the down-converted power to microgrid MG. When microgrid MG is performing an isolated operation while being disconnected from power grid PG, electric power is not supplied from power grid PG to microgrid MG. Power reception and transformation facility 501 includes a high-voltage-side (primary-side) switch (e.g., a section switch, an isolator, a breaker, and a load switch), a transformer, a protection relay, a measurement instrument, and a controller. CEMS server 100 is configured to receive information (e.g., a power waveform) on microgrid MG from power reception and transformation facility 501 and indicate connection and disconnection to power reception and transformation facility 501.

CEMS server 100 is configured to communicate with each of power transmission and distribution utility server 200 and power adjustment resource group 500. A communications protocol may be OpenADR. Power adjustment resource group 500 includes a plurality of power adjustment resources that can be electrically connected to microgrid MG. CEMS server 100 is configured to manage the plurality of power adjustment resources included in power adjustment resource group 500. CEMS server 100 may perform demand response (DR) to power adjustment resource group 500 when it is requested to adjust supply and demand of power grid PG from power transmission and distribution utility server 200. CEMS server 100 may perform DR to power adjustment resource group 500 in response to a request from a supply and demand adjustment market. CEMS server 100 may perform DR to power adjustment resource group 500 in order to adjust supply and demand of microgrid MG.

Power adjustment resource group 500 includes electric vehicle supply equipment (EVSE) 20, a house 30, a facility 40, a factory 50, an energy storage system (ESS) 60, a fuel cell system (FCS) 70, a generator 80, and a variable renewable energy source 90. Each of these may function as a power adjustment resource. The plurality of power adjustment resources included in power adjustment resource group 500 are electrically connected to one another via microgrid MG.

Power adjustment resource group 500 further includes an electric-powered vehicle. The electric-powered vehicle in the present embodiment includes a battery electric vehicle (BEV) 11, a fuel cell electric vehicle (FCEV) 12, and a plug-in hybrid electric vehicle (PHEV) 13. EVSE 20 functions as a power adjustment resource as electrically connected to an electric-powered vehicle (e.g., BEV, FCEV, or PHEV). For example, as a charging connector of EVSE 20 is inserted (plugged) into an inlet of the electric-powered vehicle, EVSE 20 and the electric-powered vehicle are electrically connected to each other.

Any number of electric-powered vehicles may be included in power adjustment resource group 500. Power adjustment resource group 500 may include a personally owned electric-powered vehicle (POV) or a mobility as a service (MaaS) vehicle. The MaaS vehicle is a vehicle managed by a MaaS entity. Any number of pieces of EVSE 20, houses 30, facilities 40, factories 50, ESSs 60, FCSs 70, generators 80, and variable renewable energy sources 90 may be included in power adjustment resource group 500.

BEV 11 includes an electronic control unit (ECU) 10a, a battery B1, and a communication apparatus C1. ECU 10a is configured to control each piece of equipment mounted on BEV 11. Communication apparatus C1 is configured to communicate wirelessly with CEMS server 100. Battery B1 includes, for example, a secondary battery such as a nickel metal hydride battery or a lithium ion battery. Electric power stored in battery B1 is used for driving a motor (not shown) for travel of BEV 11 or for driving each piece of equipment mounted on BEV 11.

FCEV 12 includes an ECU 10b, a generator H2, a battery B2, and a communication apparatus C2. Generator H2 includes a hydrogen tank (not shown) in which hydrogen is stored and a fuel cell (not shown) that generates electric power by chemical reaction between hydrogen and oxygen. The fuel cell generates electric power by using hydrogen supplied from the hydrogen tank. Electric power generated by generator H2 is used for driving a motor (not shown) for travel of FCEV 12, used for driving each piece of equipment mounted on FCEV 12, or stored in battery B2. A user of FCEV 12 can add hydrogen at a hydrogen station (not shown) provided in the city. Communication apparatus C2 is configured to communicate wirelessly with CEMS server 100. Battery B2 includes, for example, a secondary battery such as a nickel metal hydride battery or a lithium ion battery. Electric power stored in battery B2 is used for driving a motor (not shown) for travel of FCEV 12 or for driving each piece of equipment mounted on FCEV 12.

PHEV 13 includes an ECU 10c, an engine ENG, a battery B3, and a communication apparatus C3. ECU 10c is configured to control each piece of equipment mounted on PHEV 13. Communication apparatus C3 is configured to communicate wirelessly with CEMS server 100. Engine ENG is a known internal combustion engine that provides motive power through combustion of fuel (gasoline or light oil), such as a gasoline engine or a diesel engine. The motive power generated by engine ENG is used as a driving force of PHEV 13 or used for driving a power generation motor (not shown). Battery B3 includes, for example, a secondary battery such as a nickel metal hydride battery or a lithium ion battery. Electric power stored in battery B3 is used for driving a motor (not shown) for travel of PHEV 13 or for driving each piece of equipment mounted on PHEV 13.

EVSE 20 is, for example, a charging facility provided in the city. EVSE 20 is public EVSE that can be used by a user of a vehicle after prescribed authentication. An authentication method may be authentication by a charging card or authentication by communication (e.g., Plug and Charge). In the present embodiment, power adjustment resource group 500 includes a plurality of pieces of EVSE 20.

House 30 includes various home electrical appliances (e.g., a lighting device, an air-conditioning facility, kitchen equipment, information equipment, a television, a refrigerator, and a washing machine). House 30 may also include at least one of a charger-discharger (e.g., home EVSE), a variable renewable energy source (e.g., a photovoltaic panel provided on a roof), an ESS, an FCS, and a cogeneration system (e.g., a water heater or a heat pump water heater that uses heat generated in self-generation). Supply and demand of energy in house 30 is managed, for example, by a home energy management system (HEMS) 31. Microgrid MG and house 30 are connected to each other to supply and receive electric power therebetween. In the present embodiment, CEMS server 100 and each house 30 communicate with each other through HEMS 31. In the present embodiment, power adjustment resource group 500 includes a plurality of houses 30.

Facility 40 includes, for example, office buildings, hospitals, disaster countermeasures offices in the event of a disaster, data centers, and stores. Examples of the stores include department stores, shopping centers, supermarkets, or convenience stores. Supply and demand of energy in each facility is managed, for example, by a building energy management system (BEMS) 41. BEMS 41 may manage supply and demand of energy individually for each facility or may collectively manage supply and demand of energy in a plurality of facilities. Each facility included in facility 40 and microgrid MG are connected to each other to supply and receive electric power therebetween. In the present embodiment, CEMS server 100 communicates with facility 40 through BEMS 41.

Factory 50 may be, for example, a car factory or another factory. Factory 50 includes, for example, a production line and a concentrated heat source for air-conditioning. Factory 50 may also include at least one of a variable renewable energy source (e.g., a photovoltaic power generation system or a wind power generation system), EVSE, an ESS, an FCS, a generator (e.g., a gas turbine generator or a diesel generator), and a cogeneration system. Supply and demand of energy in factory 50 is managed, for example, by a factory energy management system (FEMS) 51. Microgrid MG and factory 50 are connected to each other to supply and receive electric power therebetween. In the present embodiment, CEMS server 100 and factory 50 communicate with each other through FEMS 51.

ESS 60 includes a stationary battery configured to be chargeable from and dischargeable to microgrid MG. For example, the battery included in ESS 60 may be a lithium ion battery, a lead-acid battery, a nickel metal hydride battery, a redox flow battery, or a sodium-sulfur (NAS) battery. Surplus electric power generated by variable renewable energy source 90 may be stored in ESS 60.

FCS 70 includes a stationary fuel cell that generates electric power by chemical reaction between hydrogen and oxygen. FCS 70 is connected to a hydrogen tank 71. Hydrogen tank 71 is connected to a hydrogen generator 72. FCS 70 is configured to generate electric power by using hydrogen supplied from hydrogen tank 71 and supply generated electric power to microgrid MG. Hydrogen generator 72 can adopt any method. For example, a known method such as a by-product hydrogen method, water electrolysis, a fossil fuel reforming method, a biomass reforming method, or an iodine-sulfur (IS) process may be adopted for hydrogen generator 72. Hydrogen generator 72 may generate hydrogen by using electric power supplied from microgrid MG or using surplus electric power generated by variable renewable energy source 90. CEMS server 100 may control hydrogen generator 72 such that a remaining amount of hydrogen in hydrogen tank 71 does not fall below a prescribed value.

Generator 80 is a stationary generator that generates electric power by using fossil fuel. Generator 80 may be, for example, a gas turbine generator or a diesel generator. Generator 80 may be used as an emergency power supply.

Variable renewable energy source 90 is a power supply that varies in generated power output depending on a weather condition and provides generated electric power to microgrid MG. Variable renewable energy source 90 includes, for example, a photovoltaic power generation system and a wind power generation system. Electric power generated by variable renewable energy source 90 corresponds to variable renewable energy (VRE).

CEMS server 100 includes a processor 110, a storage 120, and a communication apparatus 130. Processor 110, storage 120, and communication apparatus 130 are connected to one another by a bus 140. Processor 110 may be a central processing unit (CPU). Storage 120 is configured to store various types of information. Storage 120 stores a program executed by processor 110, as well as information (e.g., a map, a mathematical expression, and various parameters) to be used by a program. Communication apparatus 130 includes various communication interfaces (I/Fs). CEMS Server 100 is configured to communicate with the outside through communication apparatus 130.

CEMS server 100 controls power adjustment resource group 500 connected to microgrid MG to function as a virtual power plant (VPP). More specifically, CEMS server 100 remotely controls power adjustment resource group 500 as being integrated as if power adjustment resource group 500 functioned as a single power plant according to an energy management technology that makes use of the Internet of Things (IoT).

In the present embodiment, the manager of microgrid MG has an electricity contract with a power company. The power company supplies electric power to microgrid MG in accordance with the electricity contract. Under this electricity contract, electric power supplied to microgrid MG from power grid PG is determined. This electric power will also be referred to as "contract power" below. "Supplied power satisfies contract power" means that supplied power is neither too much nor too less for contract power (is included in the range determined as contract power).

CEMS server 100 is configured to adjust electric power supply and demand of microgrid MG such that electric power supplied from power grid PG to microgrid MG satisfies contract power, when microgrid MG performs the interconnected operation with power grid PG while being connected to power grid PG. During the interconnected operation of microgrid MG, CEMS server 100 controls a power adjustment resource that functions as adjustment power for microgrid MG, thereby adjusting electric power supply and demand.

CEMS server 100 is configured to adjust electric power supply and demand of microgrid MG without receiving electric power supply from power grid PG, when electric power supply from power grid PG is stopped and microgrid MG performs the isolated operation. During the isolated operation of microgrid MG, CEMS server 100 controls each power adjustment resource of power adjustment resource group 500 to adjust electric power supply and demand. Power adjustment resources included in power adjustment resource group 500 are categorized into a power adjustment resource (also referred to as "first (reception) power adjustment resource" below), which receives electric power supply, and a power adjustment resource (also referred to as "second (supply) power adjustment resource" below), which supplies electric power, in the isolated operation of microgrid MG, .

In the event of a disaster or the like, electric power supply from power grid PG may be interrupted (stopped). Also in such a case, the isolated operation of microgrid MG is performed as described above. However, some first power adjustment resources included in power adjustment resource group 500 cannot allow a stop of electric power, such as hospitals, disaster countermeasures offices, and/or data centers. Until power grid PG is recovered, it is required to achieve a supply and demand balance of electric power in a microgrid so as not to stop electric power supply to the power adjustment resources that cannot allow a stop of electric power. A period between the interruption of electric power supply from power grid PG and an expected recovery of power grid PG will also be referred to as "prescribed period" below.

Thus, CEMS server 100 according to the present embodiment sets priorities of electric power supply to the first power adjustment resources, and based on the priorities, creates an operation plan of microgrid MG over the prescribed period. The priorities indicate degrees of priorities of electric power supply and are set in stages.

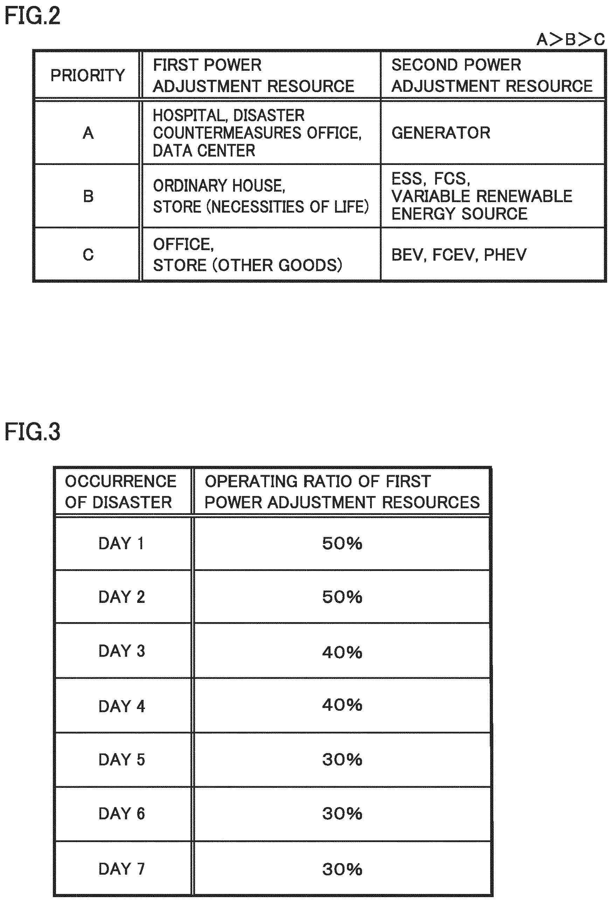

Fig. 2 is a diagram for illustrating example priority setting information (information about priorities of electric power supply). In the example shown in Fig. 2, three priorities A, B, C are determined. Priorities A, B, C are higher in order of A>B>C. Priority A is a priority that does not allow a stop of electric power. In other words, an operation plan is created such that electric power is supplied continuously for a prescribed period to the first power adjustment resource to which priority A is set. Priorities B, C are priorities that allow a stop of electric power. The operation plan is created such that a supply amount of electric power is reduced as priorities decrease to B and to C.

In the example shown in Fig. 2, first power adjustment resources to which priority A is set are a hospital, a disaster countermeasures office, and a data center. A second power adjustment resource assigned to priority A is generator 80. In other words, electric power generated by generator 80 is supplied to a hospital, a disaster countermeasures office, and a data center. Generator 80 can supply electric power more stably and more immediately than ESS 60, FCS 70, variable renewable energy source 90, and an electric-powered vehicle. First power adjustment resources to which priority B is set are an ordinary house 30 and a store that carries necessities of life. Second power adjustment resources assigned to priority B are ESS 60, FCS 70, and variable renewable energy source 90. In other words, electric power generated by ESS 60, FCS 70, and variable renewable energy source 90 is supplied to an ordinary house 30 and a store that carries necessities of life. ESS 60, FCS 70, and variable renewable energy source 90 can supply electric power more immediately than an electric-powered vehicle. First power adjustment resources to which priority C is set are an office building and a store that carries commercial goods other than necessities of life. Second power adjustment resources assigned to priority C are electric-powered vehicles (BEV 11, FCEV 12, PHEV 13). In other words, electric power generated by an electric-powered vehicle is supplied to an office building and a store that carries commercial goods other than necessities of life.

Prioritization described above is an example, and first power adjustment resources set to the respective priorities and second power adjustment resources assigned to the respective priorities may be changed appropriately, for example, in accordance with an attribute of microgrid MG.

Fig. 3 is a diagram for illustrating target operating ratios of first power adjustment resources in an operation plan. For example, as a switch made from the interconnected operation to the isolated operation, CEMS server 100 creates an operation plan such that the target operating ratios shown in Fig. 3 are satisfied. In the example shown in Fig. 3, a prescribed period spans seven days. Specifically, as electric power supply from power grid PG is interrupted (stopped) in the event of a disaster or the like, CEMS server 100 creates an operation plan for seven days based on the target operating ratios of Fig. 3. Information on the target operating ratios may be determined and stored in storage 120 in advance, or may be set based on an amount of electric power in microgrid MG at the time of interruption of electric power supply from power grid PG.

In the example shown in Fig. 3, the target operating ratios of the first power adjustment resources on day 1 and day 2 are 50%. In other words, CEMS server 100 creates an operation plan to operate 50% of the first power adjustment resources included in power adjustment resource group 500. The target operating ratios of the first power adjustment resources on day 3 and day 4 are 40%. The target operating ratios of the first power adjustment resources on day 5 to day 7 are 30%. For example, it is assumed that the first power adjustment resources to which priority A is set are 10% of the first power adjustment resources included in power adjustment resource group 500. On day 1 and day 2, CEMS server 100 assigns an amount of 40% to the operation of the first power adjustment resources to which priorities B, C are set. This amount is obtained by subtracting, from an operating ratio 50%, 10% for operating the first power adjustment resources to which priority A is set. On day 3 and day 4, CEMS server 100 assigns an amount of 30% to the operation of the first power adjustment resources to which priorities B, C are set. This amount is obtained by subtracting, from an operating ratio 40%, 10% for operating the first power adjustment resources to which priority A is set. On day 5 to day 7, CEMS server 100 assigns an amount of 20% to the operation of the first power adjustment resources to which priorities B, C are set. This amount is obtained by subtracting, from an operating ratio 30%, 10% for operating the first power adjustment resources to which priority A is set.

In the case where generator 80 may become unavailable due to the effects of a disaster or the like, for example, electric power generated in the second power adjustment resources assigned to priorities B, C may be supplied to the first power adjustment resources to which priority A is set, so as not to stop electric power supply to the first power adjustment resources to which priority A is set.

CEMS server 100 supplies electric power to each power adjustment resource over seven days in a planned manner. Electric power can thus be supplied to the first power adjustment resources to which priority A is set continuously over seven days.

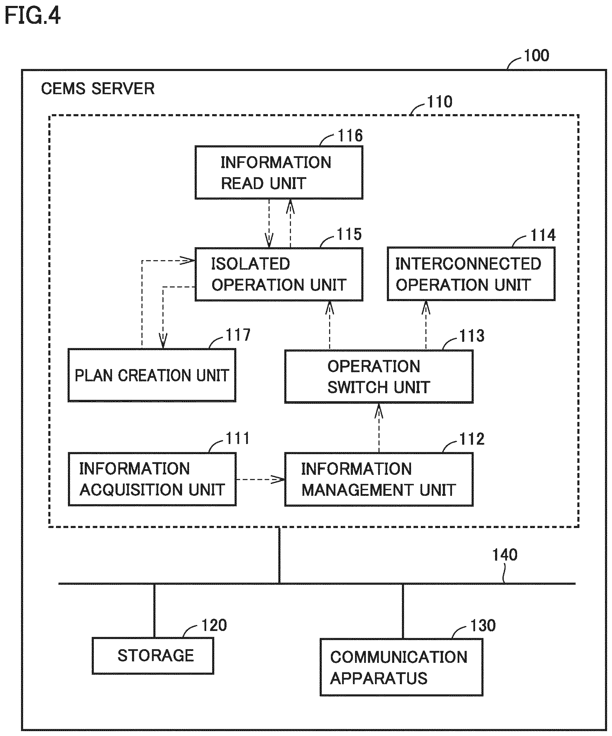

Fig. 4 is a functional block diagram showing components of CEMS server 100 by function. Referring to Fig. 4 as well as Fig. 1, processor 110 of CEMS server 100 includes an information acquisition unit 111, an information management unit 112, an operation switch unit 113, an interconnected operation unit 114, an isolated operation unit 115, an information read unit 116, and a plan creation unit 117. For example, processor 110 functions as information acquisition unit 111, information management unit 112, operation switch unit 113, interconnected operation unit 114, isolated operation unit 115, information read unit 116, and plan creation unit 117 by executing the program stored in storage 120. Information acquisition unit 111, information management unit 112, operation switch unit 113, interconnected operation unit 114, isolated operation unit 115, information read unit 116, and plan creation unit 117 may be implemented, for example, by dedicated hardware (electronic circuit).

Information acquisition unit 111 acquires various types of information through communication apparatus 130. For example, information acquisition unit 111 acquires information indicating electric power consumed by each of house 30, facility 40, and factory 50. Information acquisition unit 111 acquires information indicating a state of charge (SOC) of a battery of ESS 60 and information indicating a remaining capacity (kWh). Information acquisition unit 111 also acquires information indicating a remaining amount of hydrogen in hydrogen tank 71 of FCS 70. Information acquisition unit 111 also acquires information indicating an SOC of battery B1 of BEV 11 and information indicating a remaining capacity (kWh) of battery B1. Information acquisition unit 111 also acquires information indicating an SOC of battery B2 of FCEV 12, information indicating a remaining capacity (kWh) of battery B2, and information indicating a remaining amount of hydrogen in generation apparatus H2. Information acquisition unit 111 also acquires information indicating an SOC of battery B3 of PHEV 13, information indicating a remaining capacity (kWh) of battery B3, and information indicating a remaining amount of gasoline.

Information acquisition unit 111 also acquires information on a state of each of the first power adjustment resource and the second power adjustment resource (whether it can operate or not) based on whether communications through communication apparatus 130 are allowed or not.

Information acquisition unit 111 further acquires meteorological information, for example, from a meteorological information center (not shown) through communication apparatus 130. Information acquisition unit 111 acquires, for example, meteorological information for a prescribed period. The meteorological information includes, for example, weather information, sunshine information, and wind force information.

Information management unit 112 manages information on power adjustment resources (hereinafter also referred to as "resource information") registered with CEMS server 100. Identification information (ID) is assigned individually to each power adjustment resource included in power adjustment resource group 500 and is stored in storage 120. Information management unit 112 updates resource information for each prescribed control cycle using the information collected by information acquisition unit 111, and causes storage 120 to store the updated resource information.

The resource information may further include information indicating charging and discharging power of ESS 60, information indicating electric power generated by FCS 70, information indicating electric power generated by generator 80, information indicating electric power generated by variable renewable energy source 90, information indicating charging and discharging power of BEV 11, information indicating electric power generated by FCEV 12, and information indicating charging and discharging power of PHEV 13. Such information may be stored as resource information in storage 120 based on the specifications of each power adjustment resource, for example, when each power adjustment resource is registered with microgrid MG.

Operation switch unit 113 determines a switch between the interconnected operation and the isolated operation of microgrid MG, and provides a notification to interconnected operation unit 114 and isolated operation unit 115. During the interconnected operation of microgrid MG, operation switch unit 113 monitors whether a fault has occurred in power grid PG. Such monitoring is performed repeatedly, for example, for each prescribed control cycle. The fault means that, for example, electric power cannot be supplied from power grid PG to microgrid MG due to a power failure, a break, or the like. When no fault has occurred in power grid PG, operation switch unit 113 provides a first notification to interconnected operation unit 114. The first notification is a notification that indicates the interconnected operation. Upon receipt of the first notification, interconnected operation unit 114 continues the interconnected operation. When a fault has occurred in power grid PG, operation switch unit 113 provides a second notification to isolated operation unit 115. The second notification is a notification that indicates the isolated operation. Upon receipt of the second notification, isolated operation unit 115 starts the isolated operation.

During the isolated operation of microgrid MG, operation switch unit 113 monitors recovery of power grid PG in which the fault has occurred. Such monitoring is performed repeatedly, for example, for each prescribed control cycle. When power grid PG has not been recovered, operation switch unit 113 provides the second notification to isolated operation unit 115. Upon receipt of the second notification, isolated operation unit 115 continues the isolated operation. When power grid PG has been recovered, operation switch unit 113 provides the first notification to interconnected operation unit 114. Upon receipt of the first notification, interconnected operation unit 114 starts the interconnection operation.

The operation plan used when the isolated operation is performed is created by plan creation unit 117. First, isolated operation unit 115 instructs information read unit 116 to read various types of information at the start of the isolated operation. Specifically, isolated operation unit 115 instructs information read unit 116 to read priority setting information (Fig. 2), information on operating ratios of first power adjustment resources during a prescribed period (Fig. 3), meteorological information, and resource information. Information read unit 116 reads such information from storage 120 and outputs the read information to isolated operation unit 115. Isolated operation unit 115 further outputs the information acquired from information read unit 116 to plan creation unit 117. Information read unit 116 may output the information read from storage 120 to plan creation unit 117.

Plan creation unit 117 creates an operation plan using the information (priority setting information (Fig. 2), information on operating ratios of first power adjustment resources during the prescribed period (Fig. 3), meteorological information, and resource information) acquired from isolated operation unit 115 or information read unit 116. Specifically, plan creation unit 117 determines the operating ratio of the first power adjustment resources on each day based on information on the operating ratios of first power adjustment resources during the prescribed period. Plan creation unit 117 then creates an operation plan during the prescribed period based on the state of each first power adjustment resource (whether it can operate or not) and the state of each second power adjustment resource (whether it can operate or not), as well as an amount of electric power that can be generated by each second power adjustment resource during the prescribed period. The operation plan is created so as to allow electric power supply to the first power adjustment resources, to which priority A is set, continuously for the prescribed period. A remaining amount in hydrogen tank 71 is reflected on the amount of electric power that can be generated by FCS 70 during the prescribed period. Meteorological information (e.g., weather information, sunshine information, wind force information) is reflected on the amount of electric power that can be generated by variable renewable energy source 90 during the prescribed period. A remaining amount of hydrogen at a hydrogen station in microgrid MG or in the vicinity of microgrid MG may be reflected on the amount of electric power that can be generated by FCEV 12 during the prescribed period.

Plan creation unit 117 outputs the created operation plan to isolated operation unit 115. Isolated operation unit 115 performs the isolated operation based on the operation plan.

### <Process Performed by CEMS Server>

### <<Process during Interconnected Operation>>

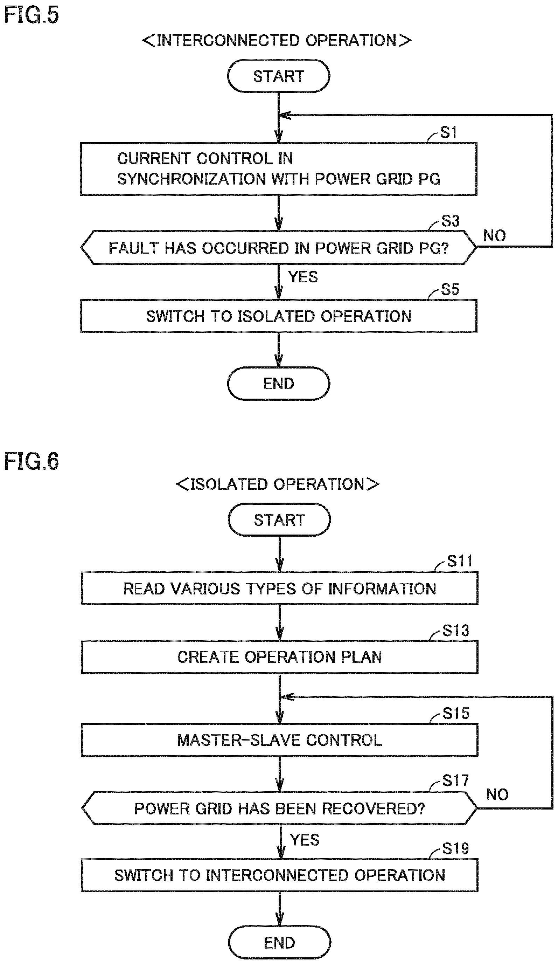

Fig. 5 is a flowchart showing a procedure of a process performed by CEMS server 100 during the interconnected operation of microgrid MG. The process of the flowchart shown in Fig. 5 is performed by CEMS server 100 during the interconnected operation of microgrid MG. Although each step (a step will be abbreviated as "S" below) of the flowcharts shown in Fig. 5 and Fig. 6, which will be described below, will be described for the case in which each step is implemented through software processing by CEMS server 100, some or all of steps may be implemented by hardware (electronic circuit) formed in CEMS server 100.

At S1, CEMS server 100 operates each power adjustment resource, for example, through current control such that the electric power of microgrid MG is synchronized with the electric power of power grid PG. CEMS server 100 adjusts a current of microgrid MG (and accordingly, a supply and demand balance of microgrid MG) by the power adjustment resource.

At S3, CEMS server 100 determines, for example, whether a fault such as a power failure has occurred in power grid PG (external grid), that is, whether electric power supply from power grid PG has been stopped inadvertently. When no fault has occurred in power grid PG (in a normal case) (NO at S3), CEMS server 100 returns the process to S 1 in order to continue the interconnected operation. When a fault has occurred in power grid PG (YES at S3), CEMS server 100 moves the process to S5 in order to switch from the interconnected operation to the isolated operation.

Since the fault has occurred in power grid PG, at S5, CEMS server 100 performs processing of switching from the interconnected operation to the isolated operation. CEMS server 100 then ends a series of processing shown in Fig. 5 and starts the process shown in Fig. 6 described below.

### <<Process during Isolated Operation>>

Fig. 6 is a flowchart showing a procedure of a process performed by CEMS server 100 during the isolated operation of microgrid MG. The process of the flowchart shown in Fig. 6 is performed by CEMS server 100 during the isolated operation of microgrid MG.

At S11, CEMS server 100 reads various types of information (priority setting information (Fig. 2), information on operating ratios of first power adjustment resources during the prescribed period (Fig. 3), meteorological information, and resource information) from storage 120.

At S13, CEMS server 100 creates an operation plan during the prescribed period using the various types of information read at S11.

At S15, CEMS server 100 operates, for example, the power adjustment resources through master-slave control based on the operation plan created at S13.

At S17, CEMS server 100 determines whether power grid PG (external grid) in which the fault had occurred has been recovered. When power grid PG has not been recovered (NO at S17), CEMS server 100 returns the process to S15. When power grid PG has been recovered (YES at S17), CEMS server 100 moves the process to S19.

At S19, CEMS server 100 switches microgrid MG from the isolated operation to the interconnected operation. More specifically, CEMS server 100 closes the breaker (interconnected breaker) of power reception and transformation facility 501 to connect microgrid MG to power grid PG. CEMS server 100 also switches a power control mode of microgrid MG from master-slave control to current control for synchronization with power grid PG. As processing of S19 is performed, CEMS server 100 ends a series of processing shown in Fig. 6 and starts the process of Fig. 5 described above.

In the present embodiment, when microgrid MG performs the isolated operation, the operation plan during the prescribed period is created based on information in which priorities of first power adjustment resources are set (priority setting information), as described above. The priority setting information includes priority A being a priority that does not allow a stop of electric power supply. For example, priority A is set to power adjustment resources such as hospitals, disaster countermeasures offices, and/or data centers. As CEMS server 100 performs the isolated operation of microgrid MG based on the operation plan, electric power can be supplied to the first power adjustment resources, to which priority A is set, continuously for the prescribed period. Moreover, electric power is supplied to the first power adjustment resources, to which priority A is set, from the second power adjustment resource that can supply electric power relatively stably and immediately, such as generator 80. Also when power grid PG goes down due to the occurrence of a disaster or the like, thus, electric power can be supplied stably and immediately to the first power adjustment resources to which priority A is set. When microgrid MG performs the isolated operation, thus, a stop of electric power supply to power adjustment resources to which priority A is set can be restricted continuously for the prescribed period.

CEMS server 100 uses the meteorological information during the prescribed period for creating an operation plan. For example, CEMS server 100 estimates an amount of electric power that can be generated by a photovoltaic power generation system, using weather information and sunshine information during the prescribed period. CEMS server 100 also estimates an amount of electric power that is generated by a wind power generation system using weather information and wind force information during the prescribed period. The use of such estimated values for creating an operation plan allows CEMS server 100 to create a suitable operation plan.

CEMS server 100 uses a remaining amount in hydrogen tank 71 of FCS 70 for creating an operation plan. For example, CEMS server 100 estimates an amount of electric power that can be generated by FCS 70 during a prescribed period from the remaining amount in hydrogen tank 71. The use of such an estimated value for creating an operation plan allows CEMS server 100 to create a suitable operation plan.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. An electric power system (1) comprising:
a plurality of power adjustment resources (500) electrically connected to a microgrid (MG); and
a management apparatus (100) that controls the plurality of power adjustment resources and manages electric power of the microgrid, wherein
the microgrid is configured to be connected to and disconnected from a commercial power grid (PG),
the plurality of power adjustment resources include a first power adjustment resource and a second power adjustment resource, the first power adjustment resource receiving electric power supply and the second power adjustment resource supplying electric power when the microgrid is disconnected from the commercial power grid and performs an isolated operation,
in the isolated operation,
the management apparatus creates an operation plan of the microgrid based on information about a priority of electric power supply to the first power adjustment resource, and
the management apparatus controls the plurality of power adjustment resources in accordance with the operation plan,
the information includes a first priority, the first priority being the priority that does not allow a stop of electric power supply in the isolated operation, and
the management apparatus creates the operation plan such that electric power supply from the second power adjustment resource to the first power adjustment resource to which the first priority is set is not stopped.

2. The electric power system according to claim 1, wherein the management apparatus creates the operation plan such that electric power supply to the first power adjustment resource to which the first priority is set is allowed continuously for a prescribed period.

3. The electric power system according to claim 2, wherein
the second power adjustment resource includes a variable renewable energy source (90), and
the management apparatus uses meteorological information during the prescribed period for creating the operation plan.

4. The electric power system according to claim 3, wherein the variable renewable energy source includes a photovoltaic power generation system.

5. The electric power system according to any one of claims 2 to 4, wherein
the second power adjustment resource includes a hydrogen power generation system (70) having a hydrogen tank (71) that stores hydrogen, and
the management apparatus uses a remaining amount in the hydrogen tank for creating the operation plan.

6. The electric power system according to any one of claims 1 to 5, wherein
the information includes information on the second power adjustment resource assigned in correspondence with the priority,
the second power adjustment resource assigned to the first priority is a stationary generator (80), and
the management apparatus supplies electric power generated by the stationary generator to the first power adjustment resource to which the first priority is set.

7. The electric power system according to any one of claims 1 to 6, wherein
the second power adjustment resource includes a charging facility (20) and an electric-powered vehicle (10a, 10b, 10c), the charging facility (20) being electrically connected to the microgrid, the electric-powered vehicle (10a, 10b, 10c) being connectable to the charging facility,
the information includes a second priority, the second priority being the priority that allows a stop of electric power supply in the isolated operation,
the second power adjustment resource assigned to the second priority includes the electric-powered vehicle, and
the management apparatus supplies electric power of the electric-powered vehicle to the first power adjustment resource to which the second priority is set.

8. A server (100) that manages electric power of a microgrid (MG) electrically connected with a plurality of power adjustment resources (500),
the microgrid being configured to be connected to and disconnected from a commercial power grid (PG),
the plurality of power adjustment resources including a first power adjustment resource and a second power adjustment resource, the first power adjustment resource receiving electric power supply and the second power adjustment resource supplying electric power when the microgrid is disconnected from the commercial power grid and performs an isolated operation,
the server comprising:
a storage (120) that stores information about a priority of electric power supply to the first power adjustment resource; and
a controller (110) that, in the isolated operation, creates an operation plan of the microgrid based on the information and controls the plurality of power adjustment resources in accordance with the operation plan,
the information includes a first priority, the first priority being the priority that does not allow a stop of electric power supply in the isolated operation, and
the controller creates the operation plan such that electric power supply from the second power adjustment resource to the first power adjustment resource to which the first priority is set is not stopped.
